# EUROPEAN PATENT APPLICATION

(11) **EP 4 512 512 A1**
(43) Date of publication of application: **26.02.2025**
(21) Application number: 23193072.8
(22) Date of filing: 24.08.2023
(51) Int. Cl.: B01D 63/08, H01M 8/04119

(54) **STACK PLATE DEVICE AND HUMIDIFIER FOR A FUEL CELL SYSTEM**

(71) Applicant: MANN+HUMMEL GmbH, 71636 Ludwigsburg (DE)
(72) Inventor: JAINEK, Herbert, 71636 Ludwigsburg (DE)
(74) Representative: Mann + Hummel Intellectual Property

(57) **Abstract**

A stack plate device (400) for a humidifier (1000) includes a stack of stack plates (100) being stacked on top of each other in a stacking direction (500), end plates (436) pressing together the stack plates (100) or both ends (430, 432) of the stack by end plates (436), and mounting profiles (204) enclosing the stack of the stack plates (100) in the stacking direction (500), and comprising recesses (206). The stack plate device (400) further includes semipermeable layers (110) separating first and second groups of flow channels (410, 420) and comprising a circumferential sealing (102) comprising at least one radial protrusion (104) per each of the mounting profiles (204), the at least one radial protrusion (104) being pressed sealingly into the recesses (206) in an intended mounting position of the semipermeable layer (110).

## Description

### TECHNICAL FIELD

The invention relates to a stack plate device for a humidifier, in particular for a fuel cell system, as well as a humidifier for a fuel cell system.

### BACKGROUND ART

Humidifiers are used for example to humidify process gas for fuel cells which are operated with molecular hydrogen and/or oxygen or air for electricity generation. The process gases supplied to the fuel cell are for this reason usually set to a desired, stable humidity in a humidifier. A humidifier comprises flow plates which are usually provided with channel structures, wherein the channels adjoin a water transfer medium, typically in the form of a semipermeable layer such as a water-transfer membrane. An assembly usually provides a plurality of flow plates, between which there are arranged water transfer membranes.

For example, on one side of a semipermeable layer a moist gas, e.g. an exhaust gas from the fuel cell, is guided through the channels of an adjacent flow plate, and on the opposite side of the semipermeable layer a dry gas, e.g. fresh air, is passed through channels of a second flow plate. In this case, the moist gas on one side of the semipermeable layer gives off moisture to the semipermeable layer, whereas on the opposite side the semipermeable layer gives off moisture to the dry gas.

A humidifier is disclosed in US 9,680,169 B2, comprising a stacked unit that contains several water vapor-permeable membranes which are arranged parallel and spaced apart relative to each other. The membranes are secured on support frames which are stacked on each other. Between two support frames a supply air flow path extends on a lateral face of the membrane and, angularly displaced thereto, an exhaust air flow path extends on the opposite lateral face of the membrane, wherein a flow opening of the supply air flow path and a flow opening of the exhaust air flow path are delimited by the support frames and extend parallel to the plane of the membrane.

A further humidifier is disclosed in US 9,859,575 B2, comprising at least one stacked unit insertable into a housing and comprising several water vapor-permeable membranes which are arranged between frame parts so as to be stacked on top of each other and spaced apart from each other. The housing comprises supports for holding the stacked unit, wherein the connection between the supports and the frame parts arranged on top of each other comprises laterally projecting connecting tabs and a receiving groove extending in vertical direction, wherein the connecting tabs project into the receiving groove.

### SUMMARY

It is an object of the invention to provide a stack plate device for a humidifier, in particular for a fuel cell system, with improved manufacturing properties.

Another object is to provide a humidifier with a stack plate device with improved manufacturing properties.

According to an aspect of the invention, the object is achieved by a stack plate device for a humidifier, in particular for a fuel cell system, having a stack of a plurality of stack plates, the stack plates being stacked on top of each other in a stacking direction, and being pressed together on both ends of the stack by end plates, the stack of stack plates is enclosed parallel to the stacking direction by mounting profiles, wherein at least first and second groups of flow channels are formed in the stack plate device for fluid flow transversely to one another on opposing sides of the stack plates and being separated by semipermeable layers, in particular moisture-permeable layers, wherein the semipermeable layer is provided with a circumferential sealing, the sealing comprising at least one radial protrusion per mounting profile, the protrusion being pressed sealingly into recesses of the mounting profiles in an intended mounting position of the semipermeable layer.

According to a further aspect of the invention, the further object is achieved by a humidifier for a fuel cell system, comprising at least one inlet for a first fluid, in particular an exhaust gas of the fuel cell system, an inlet for a second fluid, in particular a supply air of the fuel cell system, an outlet for the first fluid and an outlet for the second fluid, further comprising a stack plate device according to any one of the preceding claims, having a plurality of stack plates, the stack plates being stacked on top of each other in a stacking direction, and being enclosed on both ends of the stacking direction by end plates, the stack of stack plates being enclosed parallel to the stacking direction by mounting profiles, wherein at least first and second groups of flow channels are formed in the stack plate device for fluid flow transversely to one another on sides of the stack plates and being separated by semipermeable layers, in particular moisture-permeable layers, wherein the first group of flow channels is arranged between the inlet and the outlet for the first fluid and the second group of flow channels is arranged between the inlet and the outlet for the second fluid, wherein the semipermeable layer is provided with a circumferential sealing, the sealing comprising at least one radial protrusion per mounting profile, the protrusion being pressed sealingly into recesses of the mounting profiles in an intended mounting position of the semipermeable layer.

Advantageous embodiments are described in the dependent claims, the description and the drawings.

According to an aspect of the invention, a stack plate device for a humidifier, in particular for a fuel cell system, is proposed, having a stack of a plurality of stack plates, the stack plates being stacked on top of each other in a stacking direction, and being pressed together on both ends of the stack by end plates, the stack of stack plates is enclosed parallel to the stacking direction by mounting profiles. At least first and second groups of flow channels are formed in the stack plate device for fluid flow transversely to one another on opposing sides of the stack plates and being separated by semipermeable layers, in particular moisture-permeable layers. The semipermeable layer is provided with a circumferential sealing, the sealing comprising at least one radial protrusion per mounting profile, the protrusion being pressed sealingly into recesses of the mounting profiles in an intended mounting position of the semipermeable layer.

Favorably, the plurality of stack plates and semipermeable layers with the sealing may be stacked alternatingly on top of each other for manufacturing the stack plate device. The stack plates and the semipermeable layers are stacked between the mounting profiles wherein the stack plates and the semipermeable layers may be positioned according to a forced guiding concept. The protrusions of the sealing are guided to the recesses of the mounting profiles. In an end position of the semipermeable layer the protrusions are pressed into the recesses, thus sealing favorably one side of the stack plate device against another side of the stack plate device in an intended use in a humidifier. The protrusions are shaped in a way that the protrusions of successive semipermeable layers connect to each other, thus achieving in a continuous sealing along the recess of a mounting profile.

Advantageously, an easy and cost-effective manufacturing concept of the stack plate device can be realized. The stack device may be sealed in a humidifier by the proposed sealing without the need for gluing or foaming and curing. Also sealing materials which must be cured after joining may be avoided. Thus automatized manufacturing of the stack plate device is possible. The stack plate device may be a precursor of classical manufacturing processes. This results in a reliable solution for elastic joint sealing if elastomers are chosen appropriately.

Three of the alternatingly successive stack plates each form two of the flow channels, which are formed such that flow can pass through them transversely to one another on opposing sides of the stack plates.

The semipermeable layer separates the exhaust gas flow channel from the supply air flow channel. The semipermeable layer can be designed, for example, as a PFSA (perfluorosulfonic acid) membrane. Such membranes are also commonly used as proton exchange membranes. The membrane is airtight but permeable to moisture.

According to a favorable embodiment of the stack plate device, the protrusion may comprise two legs being pressed together when being pressed sealingly into the recess of the mounting profile. Thus, there is enough flexibility in the protrusion for proper sealing against walls of the recess when positioning the semipermeable layer between the mounting profiles.

According to a favorable embodiment of the stack plate device, the protrusion may be provided with a trapezoidal cross-section. Advantageously, a proper sealing against the recess may be achieved when the semipermeable layer is positioned in an end position between the mounting profiles.

According to a favorable embodiment of the stack plate device, the recess of the mounting profile may be provided with an opening angle, the opening angle being at least 60°, in particular being 90°. Advantageously, a proper sealing against the recess may be achieved when the semipermeable layer is positioned in an end position between the mounting profiles.

According to a favorable embodiment of the stack plate device, the semipermeable layer may be overmolded with the sealing. By this way, the sealing may be connected to the semipermeable layer in an enduring manner. Thus, cost effective manufacturing of the semipermeable layer may be achieved.

According to a favorable embodiment of the stack plate device, the stack plate may comprise a peripheral frame which encloses a through-opening in the stack plate, the through-opening being covered by the semipermeable layer. In particular, the through-opening may be reinforced by stiffening members. Thus, the stacked stack plates offer enough free space for free flowing of the first and second fluid on alternating sides of the stack plates. By the through-opening an efficient moisture transfer through the semipermeable layer may be achieved wherein the two fluids are kept separate by the semipermeable layer.

According to a favorable embodiment of the stack plate device, the frame may be provided with spacers on two opposing longitudinal sides, wherein the spacers may comprise a plurality of openings for inflow or outflow of the first or the second fluid. By this way, the spacers keep a fixed distance between the stacked stack plates. The opening allow the first and second fluid to flow between the stack plates appropriately.

According to a favorable embodiment of the stack plate device, the frame may be a metal frame, wherein the spacers may be bent lugs. Thus, easy and cost-effective manufacturing of the stack plates may be achieved. The stack plates can preferably be made from stainless steel because of advantageous flexible properties for stacking.

According to a favorable embodiment of the stack plate device, the frame may be a plastics frame, wherein the spacers may be in one piece with the frame. Thus, easy and cost-effective manufacturing of the stack plates may be achieved. The stack plates can preferably be formed from plastic, for example PA6.6 (polyamide), PPA (polyphtalamide), PPS (polyphenylene sulfide), or TPX (polymethylpentene).

According to a favorable embodiment of the stack plate device, at least one turbulence generating component, in particular a grid component, may be arranged on a first side and/or a second side of the stack plates. The turbulence generating components may be arranged on the stack plate and may support the semipermeable layer and also regulate the fluid flow for optimized mass transfer through the semipermeable layer. Height, angle and spacing of struts of the turbulence generating component can vary if necessary. The turbulence generating component may be made from plastics, e.g. PPS, or from stainless steel, e.g., for a stable support. The grid-like support element can be attached to the frame of the stack plate in a shape adapted to the frame.

According to a favorable embodiment of the stack plate device, nubs may be arranged in the frame of the stack plate for positioning of the turbulence generating component onto the stack plate. Thus, the grid-like support element can be attached to the frame of the stack plate in a reproducible position.

According to a favorable embodiment of the stack plate device, the stack plate may be overmolded with the turbulence generating component. In particular, if the stack plate is made from plastics, the turbulence generating component can be integrated during the molding process of the stack plate and thus be connected to the frame of the stack plate in a durable way.

According to a favorable embodiment of the stack plate device, the stack plates and the semipermeable membranes may be stacked alternately on top of each other in a stacking direction, wherein successive stack plates may be stacked with inflow regions transverse to each other, and wherein inflow regions of second nearest stack plates may be positioned on the same side of the stack. Thus, three each of the alternately successive stack plates form a first and a second group of flow channels formed transversely to each other for flow of the first or second fluid therethrough. The first group of flow channels are arranged between the inlet and the outlet for the first fluid and the second group of flow channels are arranged between the inlet and the outlet for the second fluid.

According to a favorable embodiment of the stack plate device, successive stack plates may be connected to one another in a fluid-tight manner except for inflow or outflow regions between the stack plates. In particular, successive stack plates may be sealed by the sealing of the semipermeable layer at the frames of the stack plates. By this way the flow channels may advantageously be sealed one against each other in the frame region in order to guarantee steady flow conditions for the exhaust gas and the supply air. Favorable humidity transfer through the semipermeable layer may be provided.

According to a further aspect of the invention, a humidifier for a fuel cell system may be proposed, comprising at least one inlet for a first fluid, in particular an exhaust gas of the fuel cell system, an inlet for a second fluid, in particular a supply air of the fuel cell system, an outlet for the first fluid and an outlet for the second fluid. Further the humidifier comprises a stack plate device, having a plurality of stack plates, the stack plates being stacked on top of each other in a stacking direction, and being enclosed on both ends of the stacking direction by end plates, the stack of stack plates being enclosed parallel to the stacking direction by mounting profiles. At least first and second groups of flow channels are formed in the stack plate device for fluid flow transversely to one another on sides of the stack plates and being separated by semipermeable layers, in particular moisture-permeable layers. The first group of flow channels is arranged between the inlet and the outlet for the first fluid and the second group of flow channels is arranged between the inlet and the outlet for the second fluid. The semipermeable layer is provided with a circumferential sealing, the sealing comprising at least one radial protrusion per mounting profile, the protrusions being pressed sealingly into recesses of the mounting profiles in an intended mounting position of the semipermeable layer.

The humidifier represents a special embodiment of a flat membrane humidifier. A first, moist or water-rich fluid, for example exhaust gas from fuel cells, flows in one group of flow channels, while a second, dry fluid, for example supply air for the fuel cells, flows in another group of flow channels. The second dry fluid can be moistened by the first fluid via the semipermeable membranes.

The first and second fluid, e.g. the exhaust gas and the supply air, may be fed to the stack plate device by the inlets and the outlets which are integrated in corresponding side covers attached to the mounting profiles of the stack plates device in a sealingly tight manner. The end plates of the stack plate device serve as a further cover, where the side covers may also be connected to. Advantageously, the humidifier does not need an additional housing, thus reducing the manufacturing costs of the humidifier significantly.

### BRIEF DESCRIPTION OF DRAWINGS

The present invention together with the above-mentioned and other objects and advantages may best be understood from the following detailed description of the embodiments, but not restricted to the embodiments.
Figure 1 shows a stack plate device for a humidifier, in particular a humidifier for a fuel cell system, according to an embodiment of the invention, in an isometric view.
Figure 2 is a top view of a semipermeable layer with a sealing upon an end plate of the stack plate device according to an embodiment of the invention.
Figure 3 is a detailed view of the semipermeable layer with a sealing according to Figure 2 during mounting.
Figure 4 is a detailed view of the semipermeable layer with a sealing according to Figure 3 in an end position.
Figure 5 is an isometric view of part of a number of stack plates stacked on top of each other, according to an embodiment of the invention.
Figure 6 is a detailed view of the number of stack plates stacked on top of each other, according to Figure 5.
Figure 7 is an exploded view of the number of stack plates stacked on top of each other, according to Figure 5.
Figure 8 is a detailed view of the number of stack plates stacked on top of each other, according to Figure 7.
Figure 9 is an isometric view of part of a number of stack plates stacked on top of each other, according to a further embodiment of the invention.
Figure 10 is a detailed view of the number of stack plates stacked on top of each other, according to Figure 9.
Figure 11 is an isometric view of part of a number of stack plates stacked on top of each other, according to a further embodiment of the invention.
Figure 12 is a detailed view of the number of stack plates stacked on top of each other, according to Figure 11.
Figure 13 shows a humidifier for a fuel cell system according to an embodiment of the invention, in an isometric view.

### DETAILED DESCRIPTION

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

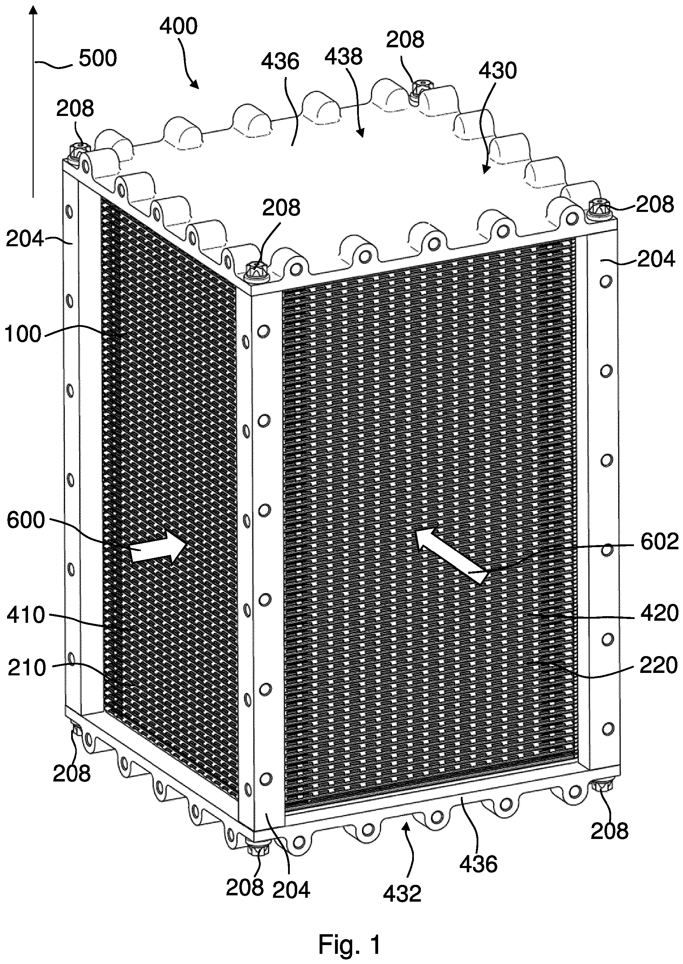

Figure 1 depicts a stack plate device 400 for a humidifier 1000, in particular a humidifier 1000 for a fuel cell system, according to an embodiment of the invention, in an isometric view.

The stack plate device 400 has a stack of a plurality of stack plates 100. The stack plates 100 are stacked on top of each other in a stacking direction 500, and are pressed together on both ends 430, 432 of the stack by end plates 436. The stack of stack plates 100 is enclosed parallel to the stacking direction 500 by mounting profiles 204.

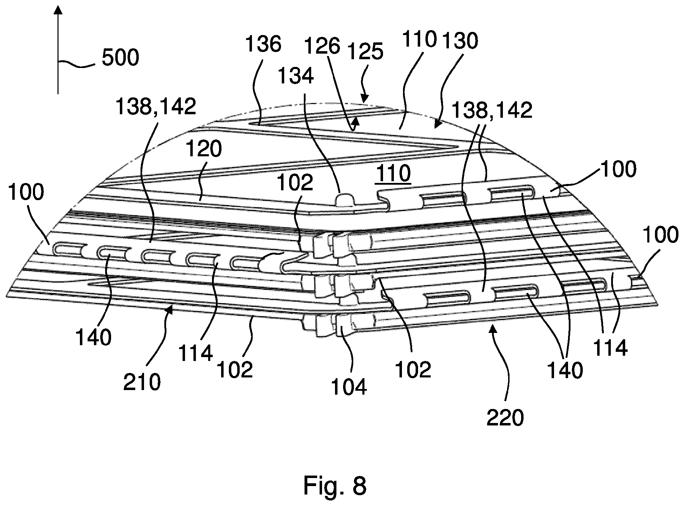

At least first and second groups of flow channels 410, 420 are formed in the stack plate device 400 for fluid flow transversely to one another on opposing sides 125, 126 (Figure 8) of the stack plates 100. The first and second groups of flow channels 410, 420 are separated by semipermeable layers 110, in particular moisture-permeable layers 110.

Three of the alternatingly successive stack plates 100 each forms two of the flow channels 410, 420, which are formed such that flow can pass through them transversely to one another on opposing sides 125, 126 of the stack plates 100.

in Figure 1 an ingoing first fluid flow 600 into the flow channels 410 through inflow regions 210 of stack plates 100 is shown and an ingoing second fluid flow 602 into the flow channels 420 through inflow regions 210 of stack plates 100. The outgoing fluid flows 600, 602 exit the stack of stack plates 100 on the opposing sides. Corresponding outflow regions 212, 222, respectively, are not to be seen.

The stack of stack plates 100 and semipermeable layers 110 is pressed together by two end plates 436 on both ends 430, 432. The end plates 436 are connected to the mounting profiles 204 by screws 208.

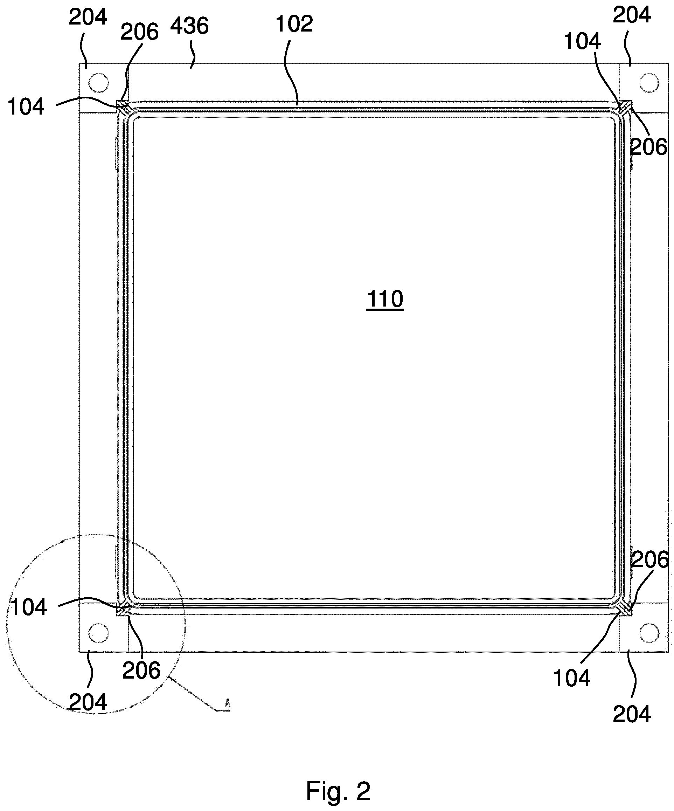

Figure 2 depicts a top view of a semipermeable membrane 110 with a sealing 102 upon an end plate 436 of the stack plate device 400 according to an embodiment of the invention.

The semipermeable layer 110 is provided with a circumferential sealing 102. The sealing 102 comprises at least one radial protrusion 104 per mounting profile 204. The protrusions 104 are pressed sealingly into recesses 206 of the mounting profiles 204 on the end plate 436. in an intended mounting position of the semipermeable layer 110.

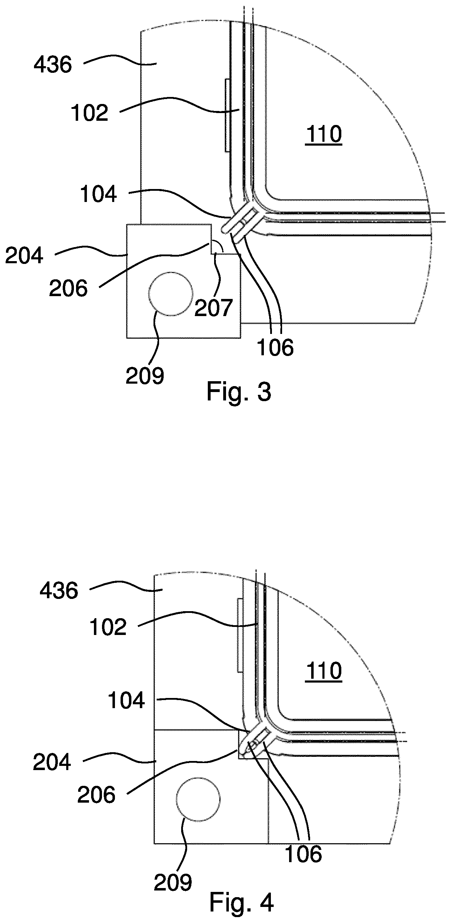

Figure 3 depicts a detailed view of the semipermeable membrane 110 with the sealing 102 during the mounting process, where the semipermeable layer 110 is not yet positioned in the intended mounting position at the mounting profile 204. Figure 4 shows the semipermeable membrane 110 in an end position.

As may be seen, the protrusion 104 comprises two legs 106 which are pressed together when the protrusion 104 is pressed sealingly into the recess 206 of the mounting profile 204. Thus, the protrusion 104 seals the different sides of the stack plate device 400 against the mounting profile 204. The mounting profile 204 is provided with a center hole 209 for attaching the mounting profile 204 to the end plate 436 by a screw.

Alternatively, the protrusion 104 may be provided with a trapezoidal cross-section, for fitting sealingly into the recess 206.

The recess 206 of the mounting profile 204 is provided with an opening angle 207. Advantageously, the opening angle 207 may be at least 60°, in particular 90°. In the embodiment shown, the opening angle 207 is 90°, which may be easy for manufacturing, appropriate for mounting the semipermeable layer 110 and also provides an effective sealing of the protrusion 104.

Favorably, the semipermeable layer 110 may be overmolded with the sealing 102. Thus, a durable connection of the sealing 102 and the semipermeable layer 110 can be provided. Also, easy mounting of the semipermeable layer 110 with the sealing may be achieved.

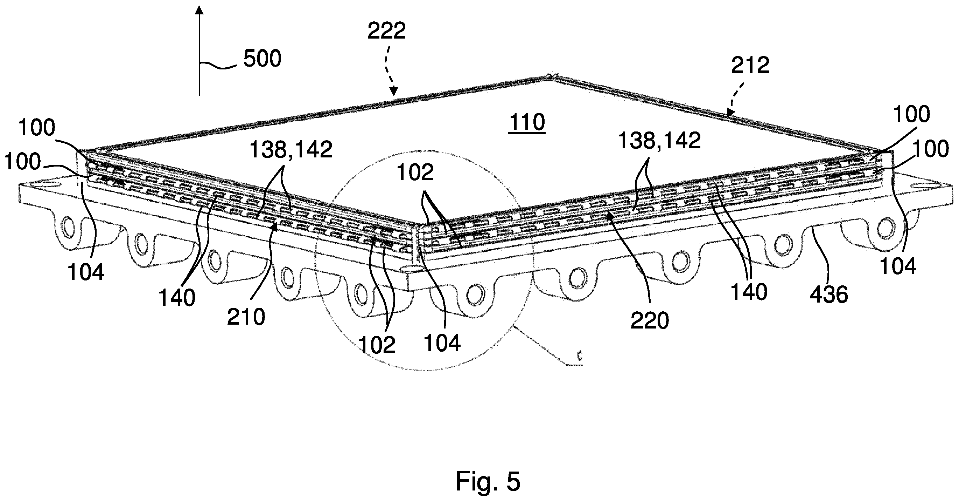

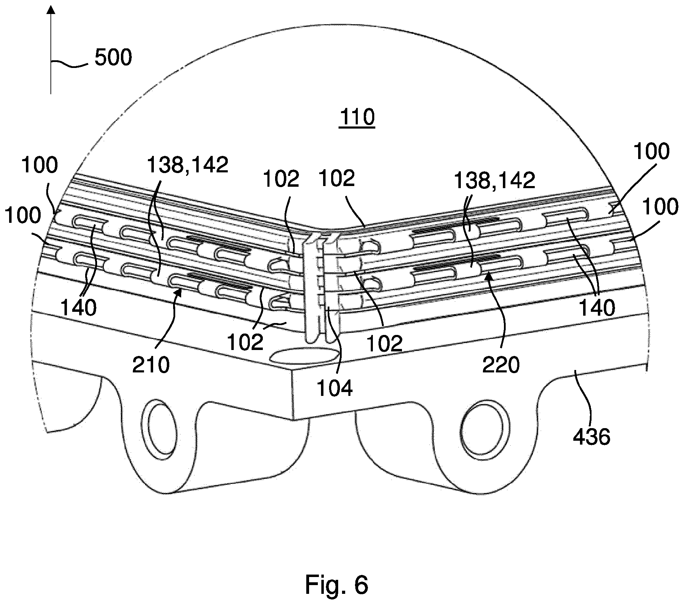

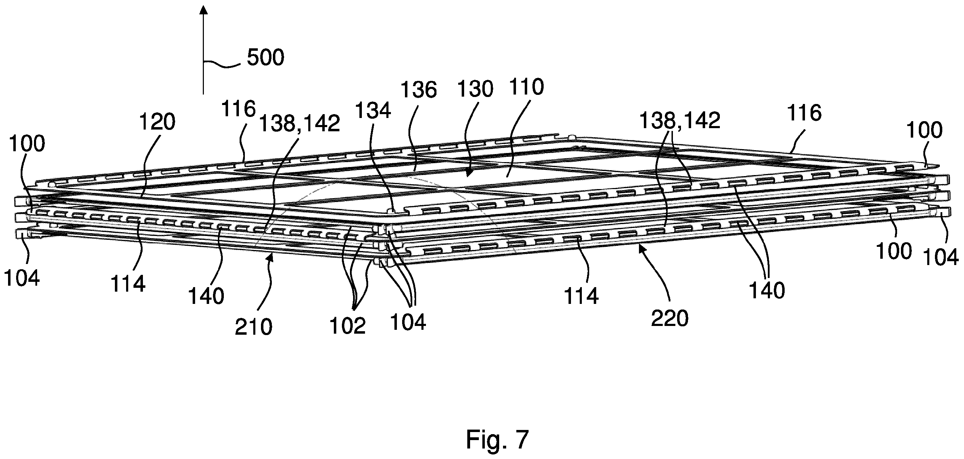

Figure 5 depicts an isometric view of part of a number of stack plates 100 stacked on top of each other, according to an embodiment of the invention, whereas in Figure 6 a detailed view of the number of stack plates 100 stacked on top of each other is shown. In Figure 7 an exploded view of the number of stack plates 100 is shown, whereas in Figure 8 a detailed view of the exploded view according to Figure 7 is depicted.

The number of stack plates 100 and semipermeable layers 110 are stacked on an end plate 436.

The stack plates 100 and the semipermeable membranes 110 are stacked alternately on top of each other in a stacking direction 500. Successive stack plates 100 are stacked with inflow regions 210, 220 transverse to each other. Inflow regions 210, 220 of second nearest stack plates 100 are positioned on the same side of the stack.

Successive stack plates 100 are connected to one another in a fluid-tight manner except for inflow or outflow regions 210, 212; 220, 222 between the stack plates 100. Successive stack plates 100 are sealed by the sealing 102 of the semipermeable layer 110 at the frames 120 (see Figures 7 and 8) of the stack plates 100.

As in particular may be seen from Figures 7 and 8, the stack plate 100 comprises a peripheral frame 120 which encloses a through-opening 130 in the stack plate 100. The through-opening 130 is covered by the semipermeable layer 110, which is stacked beneath or above the stack plate 100. The through-opening 130 is reinforced by stiffening members 136 which may support the highly flexible membrane of the semipermeable layer 110 against the pressure of the flowing fluids.

The frame 120 of the stack plate 100 is provided with spacers 138 on two opposing longitudinal sides 114, 116. The spacers 138 comprise a plurality of openings 140 for inflow or outflow of the first or the second fluid.

In the embodiment shown in Figures 5 to 8, the frame 120 is a metal frame, wherein the spacers 138 are bent lugs 142. In the bent lugs 142 the openings 140 are clearly to be seen.

In Figure 6 the alternating order of stack plates 100 and semipermeable layers 110 in the stack is to be seen. The protrusions 104 of the sealings 102 are formed in a way that the successive order of the protrusions 104 of the sealings 102 of the different semipermeable layers 110 provides a continuous sealing contour when being positioned in the recess 206 of a mounting profile 204.

in the embodiment shown in Figures 7 and 8 nubs 134 are arranged in the frame 120 of the stack plate 100 for positioning of a turbulence generating component 154 (not shown) onto the stack plate 100. The nubs 134 may be provided by stamping the frame 120 of the stack plate 100. The nubs 134 provide a reproducible positioning of the turbulence generating component 154, e.g. a grid. At least one turbulence generating component 154, in particular a grid component, may be arranged on a first side 126 and/or a second side 125 of the stack plates 100.

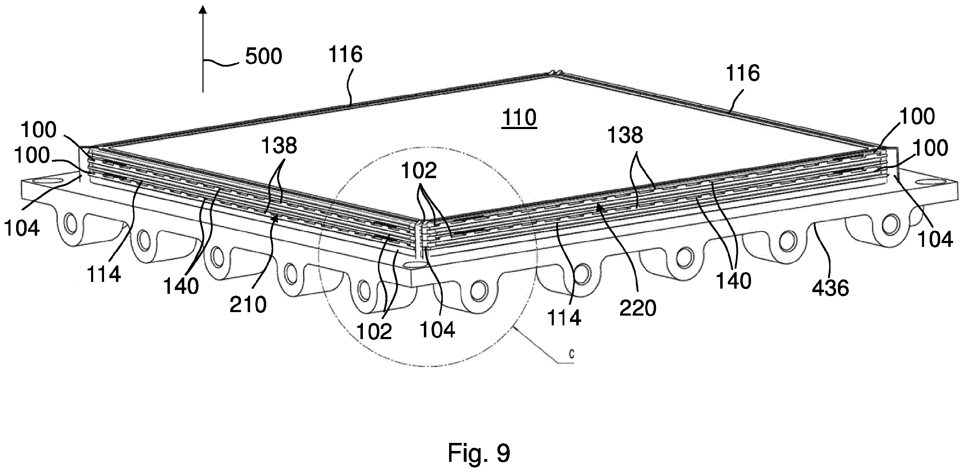

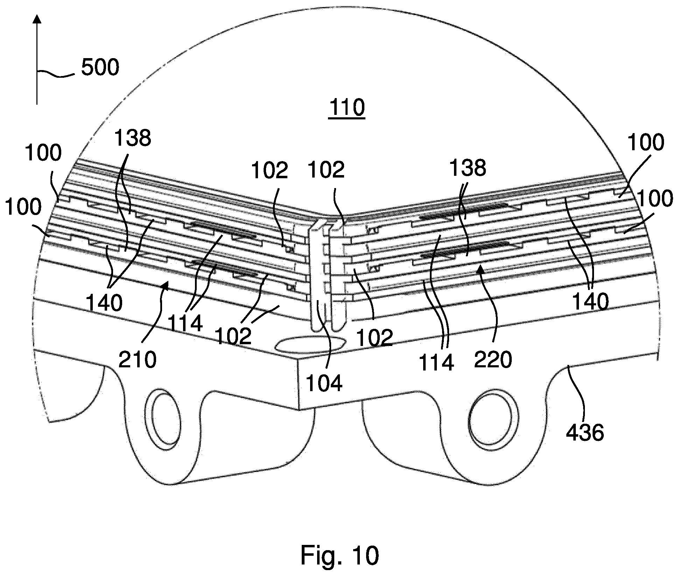

in Figure 9 an isometric view of part of a number of stack plates 100 stacked on top of each other, according to a further embodiment of the invention is depicted, whereas in Figure 10 a detailed view of the number of stack plates 100 is shown.

in this embodiment the frame 120 is a plastics frame. The spacers 138 are in one piece with the frame 120 and may be made in one manufacturing process. The spacers 138 also are provided with a plurality of openings 140 for fluid flow.

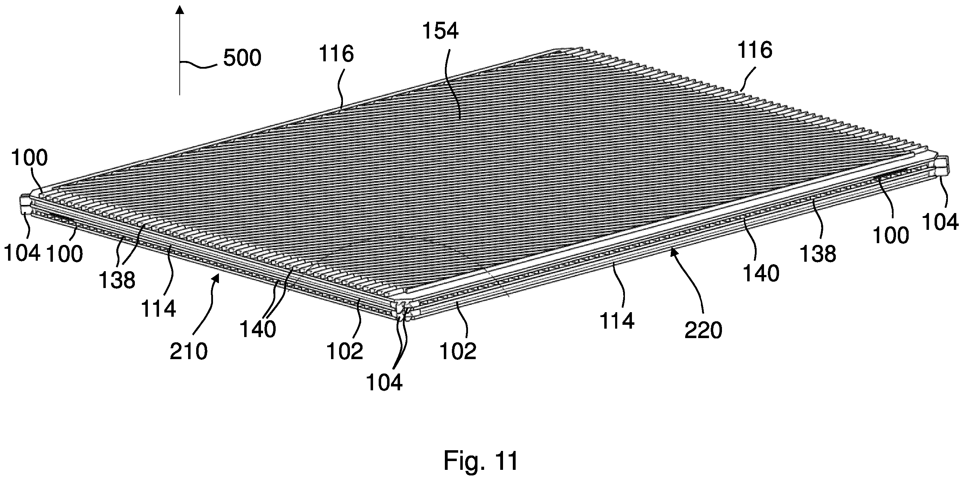

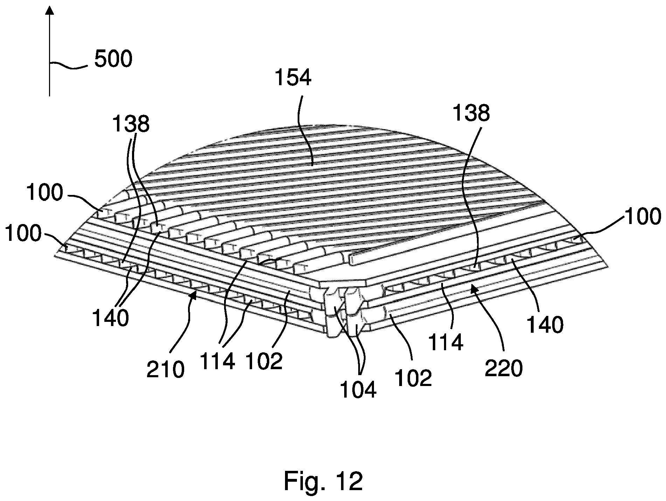

Figure 11 depicts an isometric view of part of a number of stack plates 100 stacked on top of each other, according to a further embodiment of the invention, whereas in Figure 12 a detailed view of the number of stack plates 100 is shown.

in this embodiment a turbulence generating component 154, in particular a grid component, is to be seen on the top side of the stack plates 100. in contrary to other embodiments, where turbulence generating components 154 are laid on the stack plates 100 as separate components, in this embodiment shown, the stack plate 100 is overmolded with the turbulence generating component 154. This is possible with a plastic frame. The turbulence generating component 154 may be made from the same material as the frame 120. Alternatively the turbulence generating component 154 may be an insert in an injection molding process of the stack plate 100.

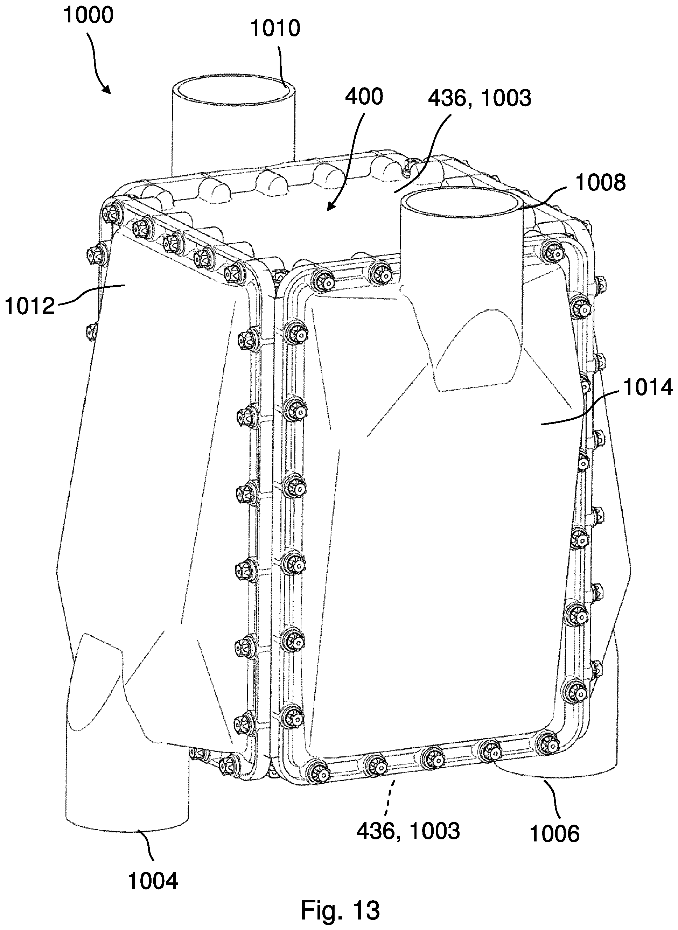

Figure 13 depicts a humidifier 1000 for a fuel cell system according to an embodiment of the invention, in an isometric view.

The humidifier 1000 comprises a stack plate device 400, having a plurality of stack plates 100, as shown in Figure 1. The stack plates 100 are stacked one on top of each other in a stacking direction 500, and are enclosed on both ends 430, 432 of the stacking direction 500 by end plates 436. The stack of stack plates 100 is enclosed parallel to the stacking direction 500 by mounting profiles 204.

A side cover 1012 with an inlet 1004 for a first fluid 600, in particular an exhaust gas of the fuel cell system, a side cover 1014 with an inlet 1008 for a second fluid 602, in particular a supply air of the fuel cell system, and respective side covers with an outlet 1006 for the first fluid 600 and an outlet 1010 for the second fluid 602 are mounted sealingly to the mounting profiles 204 and the end plates 436 of the stack plate device 400. Thus, the stack plate device 400 is provided with sealed inputs 1004, 1008 and outputs 1006, 1010 for the two fluids.

At least first and second groups of flow channels 410, 420 are formed in the stack plate device 400 for fluid flow transversely to one another on sides 125, 126 of the stack plates 100 and are separated by semipermeable layers 110, in particular moisture-permeable layers 110.

The first group of flow channels 410 is arranged between the inlet 1004 and the outlet 1006 for the first fluid 600 and the second group of flow channels 420 is arranged between the inlet 1008 and the outlet 1010 for the second fluid 602.

The semipermeable layer 110 is provided with a circumferential sealing 102. The sealing 102 comprises at least one radial protrusion 104 per mounting profile 204. The protrusions 104 are pressed sealingly into recesses 206 of the mounting profiles 204 in an intended mounting position of the semipermeable layer 110. By this way, the two fluids are provided with separate fluid flows inside the humidifier 1000, advantageously sealed against each other.

### REFERENCE SIGNS LIST

100 stack plate
102 sealing
104 protrusion element
106 leg
110 semipermeable layer
114 longitudinal side
116 longitudinal side
120 frame
125 second side, bottom side
126 first side, top side
130 through-opening
134 nub
136 stiffening member
138 spacer
140 opening
142 bent lug
154 turbulence generating component
204 mounting profile
206 recess
207 opening angle
208 screw
209 hole
210 inflow region
212 outflow region
220 inflow region
222 outflow region
400 stack plate device
410 flow channel
420 flow channel
430 end
432 end
436 end plate
500 stacking direction
600 first fluid (exhaust gas)
602 second fluid (supply air)
1000 humidifier
1003 housing cover
1004 inlet first fluid
1006 outlet first fluid
1008 inlet second fluid
1010 outlet second fluid
1012 side cover
1014 side cover

## Claims

1. A stack plate device (400) for a humidifier (1000), the stack plate device (400) comprising:
a stack of stack plates (100) being stacked on top of each other in a stacking direction (500);
end plates (436) pressing together the stack plates (100) on both ends (430, 432) of the stack by end plates (436);
mounting profiles (204) enclosing the stack of the stack plates (100) in the stacking direction (500), and comprising recesses (206),
wherein first and second groups of flow channels (410, 420) are formed in the stack plate device (400) for fluid flow transversely to one another on opposing sides (125, 126) of the stack plates (100); and
semipermeable layers (110) separating the first and second groups of flow channels (410, 420) and comprising a circumferential sealing (102) comprising at least one radial protrusion (104) per each of the mounting profiles (204), the at least one radial protrusion (104) being pressed sealingly into the recesses (206) in an intended mounting position of the semipermeable layer (110).

2. The stack plate device (400) according to claim 1, wherein any one of the at least one radial protrusion (104) comprises two legs (106) being pressed together when being pressed sealingly into a respective one of the recesses (206) of the mounting profiles (204).

3. The stack plate device (400) according to any one of the preceding claims, wherein any one of the at least one radial protrusion (104) has a trapezoidal cross-section.

4. The stack plate device (400) according to any one of the preceding claims, wherein any one of the recesses (206) of the mounting profiles (204) has an opening angle (207) of at least 60°.

5. The stack plate device (400) according to any one of the preceding claims, wherein any one of the semipermeable layers (110) is overmolded with the circumferential sealing (102).

6. The stack plate device (400) according to any one of the preceding claims, wherein any one of the stack plates (100) comprises:
a peripheral frame (120) enclosing a through-opening (130) in the any one of the stack plates (100), the through-opening (130) being covered by a respective one of the semipermeable layers (110); and
stiffening members (136) reinforcing the through-opening (130).

7. The stack plate device (400) according to claim 6, wherein the peripheral frame (120) comprises spacers (138) on two opposing longitudinal sides (114, 116), the spacers (138) comprising openings (140) for inflow or outflow of the fluid flow.

8. The stack plate device (400) according to claim 7, wherein the peripheral frame (120) is a metal frame, and
the spacers (138) are bent lugs (142).

9. The stack plate device (400) according to claim 7, wherein the peripheral frame (120) is a plastic frame, and
the spacers (138) are in one piece with the peripheral frame (120).

10. The stack plate device (400) according to claim 6, further comprising at least one turbulence generating component (154) arranged on either one or both of the opposing sides (125, 126) of a respective one of the stack plates (100).

11. The stack plate device (400) according to claim 10, wherein the peripheral frame (120) comprises nubs (134) for positioning of the at least one turbulence generating component (154) onto the respective one of the stack plates (100).

12. The stack plate device (400) according to claim 10, wherein the respective one of the stack plates (100) is overmolded with the at least one turbulence generating component (154).

13. The stack plate device (400) according to any one of the preceding claims, wherein the stack plates (100) and the semipermeable layers (110) are stacked alternately on top of each other in the stacking direction (500),
successive ones of the stack plates (100) are stacked with inflow regions (210, 220) transverse to each other, the inflow regions (210, 220) of second nearest ones of the stack plates (100) being positioned on a same side of the stack.

14. The stack plate device (400) according to any one of the preceding claims, wherein successive ones of the stack plates (100) are connected to one another in a fluid-tight manner except for inflow or outflow regions (210, 212; 220, 222) between the stack plates (100), and
the successive ones of the stack plates (100) are sealed by the circumferential sealing (102) of a respective one of the semipermeable layers (110) at peripheral frames (120) of the stack plates (100).

15. A humidifier (1000) for a fuel cell system, the humidifier (1000) comprising:
at least one inlet (1004) for a first fluid (600);
an inlet (1008) for a second fluid (602);
an outlet (1006) for the first fluid (600);
an outlet (1010) for the second fluid (602); and
the stack plate device (400) according to any one of the preceding claims,
wherein the first group of flow channels (410) is arranged between the inlet (1004) and the outlet (1006) for the first fluid (600), and
the second group of flow channels (420) is arranged between the inlet (1008) and the outlet (1010) for the second fluid (602).
